# EUROPEAN PATENT APPLICATION

(11) **EP 1 262 365 A1**
(43) Date of publication of application: **04.12.2002**
(21) Application number: 02077144.0
(22) Date of filing: 31.05.2002
(51) Int. Cl.: B60P 3/04, B60H 1/00

(54) **Vehicle for transporting animals**

(30) Priority: 01.06.2001 NL 1018197
(71) Applicant: Berdex Carrosserie- en Handelsonderneming B.V., 5446 PL Wanroij (NL)
(72) Inventor: Van Schijndel, Huub, 5845 EP St Anthonis (NL); Kuunders, René, 5445 AA Landhorst (NL)
(74) Representative: Prins, Adrianus Willem

(57) **Abstract**

A truck trailer for transporting animals, in particular cattle for breeding and/or slaughter, the truck trailer (1) being provided with a load space (2), the load space (2) being provided with substantially closed front (4), rear (5), lower (6), upper (7) and side walls (8), the truck trailer (1) being provided with an air supply and discharge system (3) arranged to maintain in the load space (2) air conditions for the purpose of keeping alive the animals to be transported.

The invention also relates to a truck, and to a use of a truck trailer.

## Description

The present invention relates to a truck trailer for transporting animals, in particular cattle for breeding and/or slaughter, the truck trailer being provided with a load space.

Such a trailer is known from practice and usually forms part of a truck. As referred to herein, a truck is also a truck combination. The load space of the truck trailer serves to accommodate the animals to be transported. The known trailer is provided with openings in the side wall enabling direct exchange of air from the surroundings to the load space, and vice versa. As a result of thereof, this load space is properly ventilated during transport with outside air for the purpose of providing the animals with oxygen. Moreover, the ventilation ensures that the content of carbon dioxide in the air in the load space remains at a level safe to the animals.

A drawback of the known truck trailer is that the air conditions in the load space are not properly controllable. Thus, for instance, an excessive draft may prevail in the load space. Furthermore, the temperature in the load space may undergo relatively great temperature fluctuations or reach an undesirably low or high value. Such draft and/or temperature control problems may be very unpleasant to the animals to be transported. Moreover, these problems may damage the health of the animals.

An additional drawback is that polluted ambient air may reach the load space, which may also damage the health of the animals. Such air pollution may comprise, for instance, exhaust gases, soot particles or such pollution.

A further drawback of the known truck trailer is that a disease infectious to the animals and transmissible via the air, such as plague, foot-and-mouth disease, or the like, may reach the healthy animals in the load space from the surroundings. Consequently, this trailer is not suitable for transporting these animals safely, at least without risk of infection, through the surroundings in which such a disease prevails.

A related drawback is that the truck trailer may be a source of infection of such a disease if the animals to be transported are infected therewith. This has the result that during transport of sick animals the truck trailer may infect with the disease a relatively large area extending along a transport route of the trailer.

An additional drawback is that specific smells, such as manure and/or urine smells, may reach the surroundings from the load space. These smells may cause inconvenience in the surroundings of the load space. This has the result that in specific situations the truck trailer is not allowed to be parked in a specific advantageous position, for instance during transport by ferry boat. In those situations the trailer is only allowed to be parked in a disadvantageous position, for instance hard to reach and/or unpleasant to the animals in the load space, such as on the upper deck in the case of transport by ferry boat.

It is an object of the invention to remove at least a number of the drawbacks of the known truck trailer. In particular, it is an object of the invention to provide a truck trailer in which the air conditions in the load space are controllable, so that draft, excessive cold or heat in the load space can be prevented.

According to the invention, the truck trailer is therefore characterized in that the load space is provided with substantially closed front, rear, lower, upper and side walls, the truck trailer being provided with an air supply and discharge system arranged to maintain in the load space air conditions for the purpose of keeping alive the animals to be transported.

Through the load space being provided with substantially closed rear, lower, upper and side walls, the air supply and discharge system may properly control, at least maintain the air conditions in the load space. Thus, the generation of draft, relatively great temperature fluctuations, cold or heat in the load space can be simply prevented, which is of benefit to the welfare and health of the animals. The air supply and discharge system may ensure that during transport animals in the load space get ample oxygen to remain alive. The load space is preferably provided with a substantially hermetically sealable loading/unloading entrance via which the animals can be loaded and unloaded.

According to a preferred embodiment, the air supply and discharge system is arranged to keep the load space at an air pressure different from a pressure prevailing in the surroundings of the load space.

If the load space is kept, for instance, at an excess pressure relative to an ambient pressure, a possible air flow from the surroundings to the load space, for instance via an undesirable and/or unnoticed leak in a wall of the load space, is prevented. This substantially reduces the risk that air pollution and/or a disease infectious via the air may reach the load space from the surroundings. On the other hand, if the load space is kept at a reduced pressure relative to the pressure prevailing in the surroundings, air is prevented from flowing, for instance via a leak, from the load space to the surroundings. This is advantageous if the animals in the load space are infected with a disease transmissible via the air, because this reduces a risk of infection from the surroundings by air from the load space. Moreover, this is advantageous in connection with unpleasant smells from the animals in the load space, since these smells thus also have less chance of escaping from the load space to the surroundings.

Preferably, the air supply and discharge system is provided with air supply means for supplying air, in particular ambient air, to the load space. In that case, it is advantageous if the air supply and discharge system is arranged to render innocuous disease germs and/or air pollution in the air to be supplied to the load space and/or to filter these out of that air.

As a result, the risk that a disease infectious to animals and transmissible via the air and/or air pollution may spread from the surroundings of the load space via the air supplied to the load space is relatively low.

According to a further elaboration of the invention, the air supply and discharge system is provided with air discharge means for discharging air from the load space to the surroundings. In that case, it is advantageous if the air supply and discharge system is arranged to render innocuous disease germs and/or smells contained in the air to be discharged and/or to filter these out of that air.

This reduces the risk that disease germs and/or possible unpleasant smells from animals in the load space may reach the surroundings.

The invention further provides a use of a truck trailer characterized by the features of claim 17.

Because the load space is substantially hermetically sealed after the load space has been loaded with the animals to be transported, the air supply and discharge system can properly maintain the air conditions in the load space for the purpose of keeping the animals alive, while the generation of draft, heat or cold in the load space can be effectively prevented. Furthermore, this substantially reduces the risk of infection transmitted by disease germs between the load space and the surroundings. Moreover, this prevents spreading of possible unpleasant smells from the load space.

Further elaborations of the invention are described in the subclaims and will be specified below on the basis of an exemplary embodiment with reference to the drawing.
Fig. 1 shows a partially cutaway side view of an exemplary embodiment of the invention;
Fig. 2 shows a sectional view on the line II-II of the side view shown in Fig. 1;
Fig. 3 shows a sectional view on the line III-III of the sectional view shown in Fig. 2;
Fig. 4 shows detail Q of the side view shown in Fig. 1; and
Fig. 5 shows a sectional view on the line V-V of detail Q shown in Fig. 4.

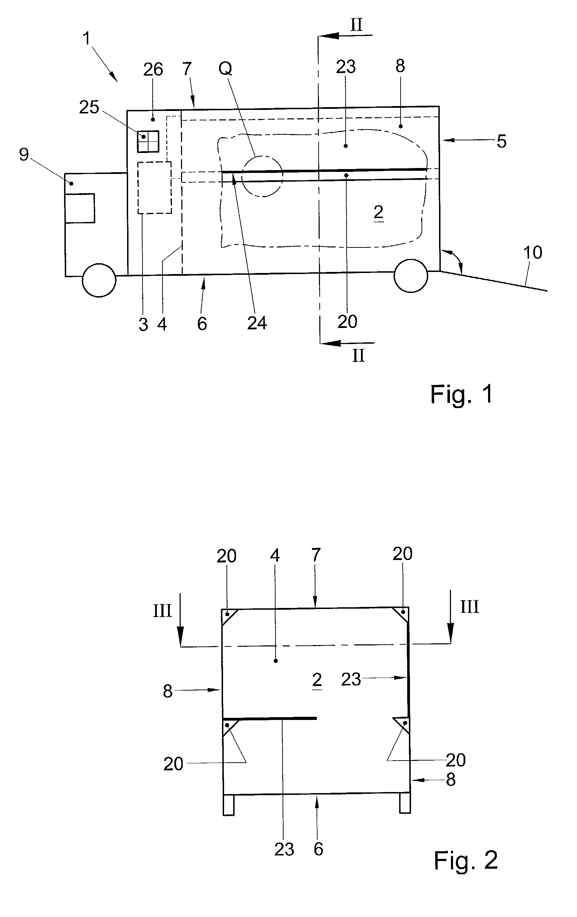

Figs. 1 and 2 show a truck provided with a truck trailer 1 for transporting animals and with a driver's cabin 9 for a driver of the truck. The trailer 1 is provided with a load space 2 having a substantially closed front wall 4, rear wall 5, floor 6, top wall 7, and two substantially closed side walls 8. The rear wall 5 is provided with a loading/unloading entrance substantially hermetically sealable by a tailgate 10. The tailgate 10 may be arranged in different ways to enable loading and unloading of animals into and out of the load space 2. The tailgate 10 may be coupled to the trailer 1, for instance turnable on a horizontal axis, as diagrammatically shown in Fig. 1 by arrows. Furthermore, the tailgate 10 may be provided with, for instance, a lifting mechanism to enable movement of the tailgate 10 between different vertical loading/unloading levels. Besides, the tailgate 10 may comprise, for instance, a weighing mechanism for weighing the animals during loading and/or unloading.

On the side walls 8 of the load space 2, intermediate floors 23 are connected by means of hinges 24, such that each intermediate floor 23 is swingable between a lowered and a raised position. In the lowered and the raised position, each intermediate floor 23 extends parallel to respectively the floor 6 and side walls 8 of the load space 2. With these intermediate floors 23, a second transport level can be created in the load space 2 above the transport level provided by the floor 6, so that the transport volume of the load space 2 can be utilized optimally.

Instead of swingable intermediate floors, it is also possible that the load space 2 is provided with height-adjustable intermediate floors. These height-adjustable floors are known in two versions, that is to say a version in which the adjustment is only possible if no load is placed thereon and a version also adjustable if a load is placed thereon. It is also possible, for that matter, that the intermediate floor is stationary.

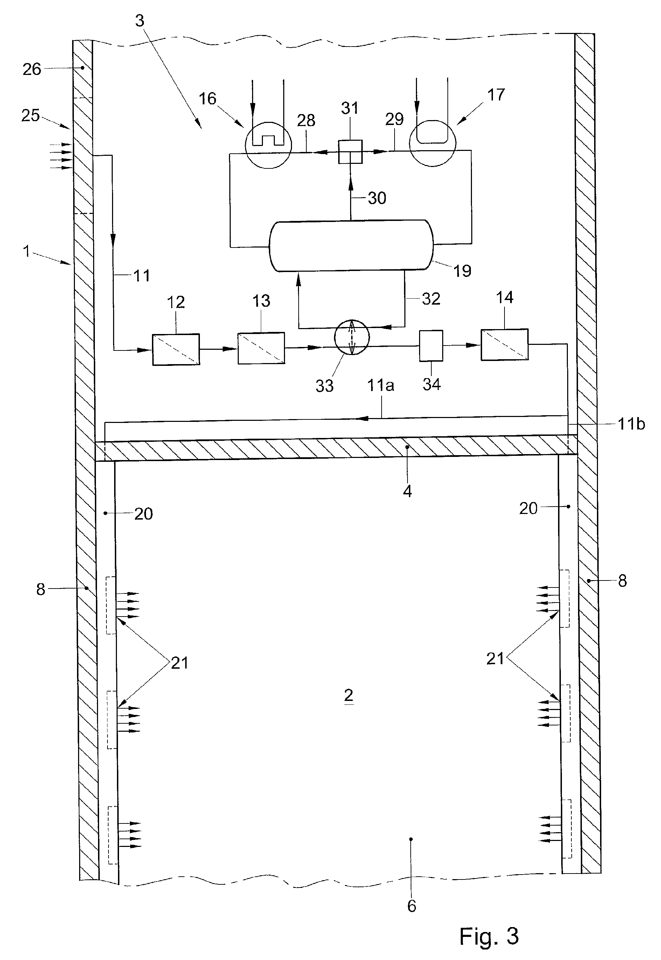

In the truck trailer 1, an air supply and discharge system 3 is disposed on the side of the load space front wall 5 facing away from the load space 2. This air supply and discharge system 3 is provided with air supply means 11, 20, 25, 34 for supplying ambient air from the surroundings of the load space 2 to the load space 2. Furthermore, the air supply and discharge system 3 is provided with air discharge means for discharging air from the load space 2 to the surroundings, which discharge means, for clarity's sake, are not shown in the drawing. The air supply means comprise an air inlet 25 provided in a leading side wall part 26 of the trailer 1. It may be clear that the air inlets 25 may also be provided in the head wall and/or the roof of the truck trailer 1. As shown in Fig. 3, the air inlet 25 is connected via an air duct system 11 to four air distributing channels 20 disposed in the load space 2. Therefore, the ends of end branches 11a, 11b of the duct system 11 extend through the front wall 4 of the load space 2. A fan 34 is connected to the duct system 11 for the purpose of generating an air flow from the air inlet 25 to the distributing channels 20. If the truck trailer 1 is not provided with intermediate floors, two air distributing channels will suffice. It is also possible that the truck trailer is provided with three intermediate floors. In that case, six air distributing channels may be disposed. Optionally, odd numbers of air distributing channels may also be used, some of these channels being connected to the outlet of the air supply and discharge system, so that air is blown in on one side of the load space and discharged on the other side.

The air supply and discharge system 3 is provided with a coarse filter 12 and a fine filter 13 successively connected to the duct system 11. With these filters 12, 13, the ambient air to be supplied can be cleared of respectively relatively coarse and fine particles and impurities. Furthermore, a HEPA (high effective particulate air) filter 14 is placed between the fan 34 and the end branches 11a, 11b of the duct system 11. The HEPA filter 14 is arranged to filter disease germs and/or air pollution out of the air to be supplied. Preferably, the HEPA filter is arranged to filter particles having a diameter of at least 0.3 µm out of the air. The use of the HEPA filter 14 substantially reduces the risk that animals in the load space 2 come into contact with disease germs and/or air pollution supplied via the ambient air.

The air supply and discharge system 3 further comprises an air temperature control system for controlling the temperature of the ambient air to be supplied to the load space 2. This control system is provided with a cooling system 16, a heating system 17, a fluid buffer reservoir 19, and a heat exchanger 33. The cooling and heating systems 16, 17 are arranged to respectively cool and heat a heat transfer fluid contained in the buffer reservoir 19. The cooling system 16 and the heating system 17 are therefore coupled via a fluid duct respectively 28 and 29 to a fluid duct 30 coupled with the reservoir 19 via a three-way valve 31. With this three-way valve 31, it can be controlled whether the cooling system 16 or the heating system 17 is used. The heat exchanger 18 is arranged to bring the heat transfer fluid into heat exchanging contact with the air flowing through the duct system 11 for controlling the temperature of that air. The use of the buffer reservoir 19 prevents relatively great temperature fluctuations of the heat transfer fluid and therefore of the air to be supplied to the load space 2.

The cooling system 16 may comprise a commercially sold cooling system, for instance a conventional cooling unit provided with a compressor, a condenser, evaporator, and the like. Analogously, the heating system 17 may comprise a conventional heating system, for instance an electric heating system, a combustion heater utilizing truck fuel, such as, for instance, a diesel heater, or the like. The heat transfer fluid may comprise, for instance, a liquid, such as water, or a gas. For clarity's sake, pumping means for circulating the heat transfer fluid are not shown in the drawing.

It is advantageous if the cabin 9 of the truck is provided with means for controlling, regulating and/or checking the condition of the air supply and discharge system 3. This enables a driver of a truck during driving to simply keep an eye on and, if desired, to adjust the condition of the air supply and discharge system 3. Furthermore, the air supply and discharge system 3 may be provided with a climate control computer for accurate automated control of the climate in the load space 2.

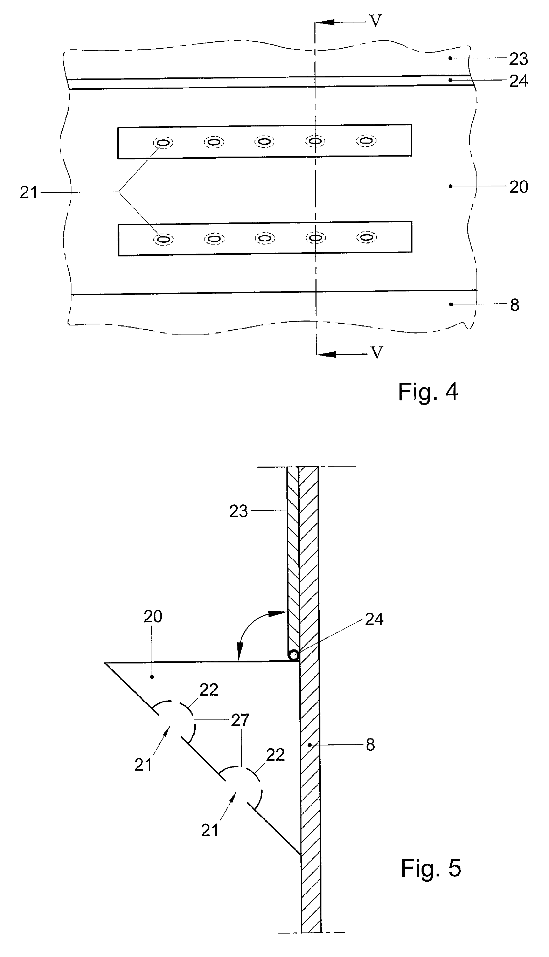

The four air distributing channels 20 disposed in the load space extend in pairs parallel above and below the intermediate floors 23. Each air distributing channel 20 is arranged to supply the air supplied from the surroundings to the load space 2 in several spaced apart positions. This ensures a relatively homogeneous air distribution in the load space 2, so that the animals have sufficient oxygen everywhere in the load space 2. Each channel 20 is therefore provided with several spaced apart air outflow openings 21, as shown in Figs. 4 and 5. Upstream of each air outflow opening 21, an air flow resistance is disposed in the relevant channel 20. In the present exemplary embodiment, each flow resistance is designed as a dome-shaped wall 22 provided with relatively small air passages 27 and extending over the relevant outflow opening 21. These dome-shaped walls 22 ensure that if air flows through the air distributing channel 20, an excess pressure relative to the air pressure in the load space 2 is created in the air distributing channel 20. This is very advantageous because this prevents flow induction, so that recirculation of air is avoided. Such recirculation, in which air flows from the load space 2 into an air distributing channel, may disturb the effect of the air supply and discharge system 3.

When using the truck, the load space 2 is loaded with the animals to be transported, using the tailgate 10. Subsequently, the load space 2 is substantially hermetically sealed. The air supply means 11, 20, 25, 34 of the air supply and discharge system 3 supply ambient air to the load space 2. The air supply and discharge system 3 heats this air up to a temperature comfortable to the animals. Optionally, the air is filtered, such that the risk of infection of the animals with a disease from the surroundings is low. Optionally, the air supply and discharge system 3 may therefore be provided with a UV light source for irradiating the entering air with UV light for the purpose of disinfecting the entering air. The air discharge means of the system 3 discharge air from the load space 2 to the surroundings, preferably such that the air pressure in the load space 2 obtains a specific desired value.

It is advantageous if the air supply and discharge system 3 is arranged to render innocuous disease germs and/or smells in air to be discharged from the load space 2 to the surroundings and/or to filter these out of that air. If in the former case disease germs have been rendered innocuous and/or filtered out of the air, animals in the load space 2 of the truck trailer 1 infected with a disease can be transported without the load space 2 forming a source of infection enabling spreading of a disease along the transport route of the trailer 1 via the discharge of infected air into the surroundings. The air supply and discharge system 3 may therefore be provided with a UV light source for irradiating with UV light the air discharged from the load space for the purpose of disinfecting the leaving air.

In the second case, if smells have been made innocuous and/or filtered out of the air, inconvenience caused by these smells in the surroundings may be prevented. This is advantageous if the trailer 1 is, for instance, put across by ferry boat, since in that case the trailer 1 can be parked on the lower deck without causing stench nuisance.

Preferably, the air supply and discharge system 3 of the truck trailer 1 is arranged to keep the load space 2 at an air pressure different from a pressure prevailing in the surroundings of the load space 2. If, for instance, the load space is kept at an excess pressure relative to the surroundings, an undesirable air flow from the surroundings to the load space, for instance via a leak in a wall 4, 5, 6, 7, 8 of the load space 2 is simply prevented.

It is self-evident that the invention is not limited to the described exemplary embodiment. Various modifications are possible within the scope of the invention.

Thus, for instance, a truck or a truck combination may be provided with several truck trailers 1 according to the present invention. Analogously, a trailer 1 may be provided with several load spaces 2.

Furthermore, a truck trailer may be provided with one or several air supply and discharge systems 3 for maintaining air conditions in the load space. Moreover, several air supply and discharge systems 3 may be disposed in the trailer 1 for the purpose of maintaining air conditions in different parts of a load space 2, such as at different transport levels in the load space 2. Analogously, the trailer 1 may be provided with backup air supply and discharge systems 3.

Besides, the trailer 1 may be provided with a compression air and/or oxygen reservoir from which respectively air and oxygen can be supplied to the load space 2. Thus, for instance, at least temporarily, the supply of ambient air to the load space 2 can be avoided completely, which is particularly advantageous if there is a risk that ambient air may contain air pollution and/or specific disease germs infectious to the animals.

The entrance to the load space 2 may be closed in different ways, for instance by a tailgate 10, doors, a roller shutter, or the like. Furthermore, the load space 2 may be provided with discharge means for discharging dirt, excrements, urine, cleaning liquid, and the like. Such discharge means may be provided, for instance, in the floors 5, 23.

The filtering means 12, 13, 14, may be designed in different ways and may comprise, for instance, carbon filters, multi-V filters, screens, and the like. In particular carbon filters are very suitable for filtering specific smells out of the air.

The air may further be treated in different ways so as to render innocuous disease germs in that air, for instance by a chemical treatment and/or a temperature treatment.

Besides, various feeding and/or drinking systems, such as troughs, nipple drinker ducts, and the like, may be disposed in the load space 2.

Furthermore, the walls 4, 5, 6, 7, 8 of the load space 2 are preferably insulated, so that the temperature in the load space does not vary too much under the action of an ambient temperature and/or sunlight falling on the load space 2.

The animals to be transported with the trailer 1 may comprise, for instance, pigs, sheep, cattle, horses, poultry or a combination of these and other animals.

## Claims

1. A truck trailer for transporting animals, in particular cattle for breeding and/or slaughter, the truck trailer (1) being provided with a load space (2), **characterized in that** the load space (2) is provided with substantially closed front (4), rear (5), lower (6), upper (7) and side walls (8), the truck trailer (1) being provided with an air supply and discharge system (3) arranged to maintain in the load space (2) air conditions for the purpose of keeping alive the animals to be transported.

2. A truck trailer according to claim 1, **characterized in that** the load space (2) is provided with a substantially hermetically sealable loading/unloading entrance (5).

3. A truck trailer according to claim 1 or 2, **characterized in that** the air supply and discharge system (3) is arranged to keep the load space (2) at an air pressure different from a pressure prevailing in the surroundings of the load space (2).

4. A truck trailer according to any one of the preceding claims, **characterized in that** the air supply and discharge system (3) is provided with air supply means (11, 20, 25, 34) for supplying air, in particular ambient air, to the load space (2).

5. A truck trailer according to claim 4, **characterized in that** the air supply and discharge system (3) is arranged to render innocuous disease germs and/or air pollution in the air to be supplied to the load space (2) and/or to filter these out of that air.

6. A truck trailer according to claim 5, **characterized in that** the air supply and discharge system (3) is provided with at least one HEPA filter (14) for filtering disease germs and/or air pollution out of the air to be supplied to the load space (2).

7. A truck trailer according to any one of claims 4-6, **characterized in that** the air supply and discharge system (3) is provided with a cooling system (16) for the purpose of cooling the air to be supplied to the load space (2).

8. A truck trailer according to any one of claims 4-7, **characterized in that** the air supply and discharge system (3) is provided with a heating system (17) for the purpose of heating the air to be supplied to the load space (2).

9. A truck trailer according to claims 7 and 8, **characterized in that** the cooling system (16) and the heating system (17) are arranged to respectively cool and heat a heat transfer fluid, the air supply and discharge system (3) being provided with a heat exchanger (18) arranged to bring the heat transfer fluid into heat exchanging contact with the air to be supplied to the load space (2).

10. A truck trailer according to claim 9, **characterized in that** the air supply and discharge system (3) is provided with a fluid buffer reservoir (19) for storage of the heat transfer fluid.

11. A truck trailer according to any one of claims 4-10, **characterized in that** the air supply means of the air supply and discharge system (3) are connected to air distributing means (20) disposed in the load space, which air distributing means (20) are arranged to supply air to the load space (2) in several spaced apart positions.

12. A truck trailer according to claim 11, **characterized in that** the air distributing means comprise at least one air distributing channel (20), which channel (20) is provided with several spaced apart air outflow openings (21).

13. A truck trailer according to claim 12, **characterized in that** each air distributing channel (20) is provided at at least one and in particular at each outflow opening (21) with an air flow resistance (22), each air flow resistance (22) being arranged to create an excess pressure in the air distributing channel (20), at least at the relevant outflow opening (21), relative to the air pressure in the load space (2) when air flows through the air distributing channel (20).

14. A truck trailer according to any one of the preceding claims, **characterized in that** the air supply and discharge system (3) is provided with air discharge means for discharging air from the load space (2) to the surroundings.

15. A truck trailer according to claim 14, **characterized in that** the air supply and discharge system (3) is arranged to render innocuous disease germs and/or smells in the air to be discharged and/or to filter them out of that air.

16. A truck according to claim 5, **characterized in that** the air supply and discharge system (3) is provided with a UV light source for irradiating the entering air with UV light for the purpose of disinfecting the entering air.

17. A truck according to claim 15, **characterized in that** the air supply and discharge system (3) is provided with a UV light source for irradiating with UV light the air discharged from the load space for the purpose of disinfecting the leaving air.

18. A truck, provided with at least one truck trailer according to any one of the preceding claims, **characterized in that** a cabin of the truck is provided with means for controlling, regulating and/or checking the condition of the air supply and discharge system (3).

19. A use of a truck trailer according to any one of the preceding claims, **characterized in that** the load space (2) is loaded with the animals to be transported, the load space (2) then being substantially hermetically sealed, the air conditions in the load space (2) being maintained by the air supply and discharge system (3) for the purpose of keeping the animals alive.
